# EUROPÄISCHE PATENTSCHRIFT

(11) **EP 2 910 843 B1**
(45) Veröffentlichungstag und Bekanntmachung des Hinweises auf die Patenterteilung: **07.12.2016**
(21) Anmeldenummer: 14156314.8
(22) Anmeldetag: 24.02.2014
(51) Int. Cl.: F21K 99/00, F21V 7/00, F21V 23/00, F21Y 103/33

(54) **Beleuchtungseinheit**
Lighting device
Lampe

(43) Veröffentlichungstag der Anmeldung: 26.08.2015
(73) Patentinhaber: Hella KGaA Hueck & Co., 59552 Lippstadt (DE)
(72) Erfinder: Brummel, Reinhold, 59609 Anröchte (DE); Kerpe, Alexander, 59555 Lippstadt (DE)

(56) Entgegenhaltungen:
- EP-A1- 2 693 116
- WO-A1-2012/176354
- WO-A1-2013/183198
- WO-A2-2010/101405
- US-A1- 2011 075 412
- US-A1- 2012 134 133
- US-A1- 2012 139 403
- US-A1- 2012 273 812
- US-A1- 2012 287 632

## Beschreibung

Die Erfindung betrifft eine Beleuchtungseinheit für eine Dekorleuchte, insbesondere für eine Licht seitlich beziehungsweise nach unten abstrahlende Pilzleuchte.

Aus der US 2012/0287632 A1, der WO 2012/176354 A1 und der US 2012/273812 A1 ist eine Beleuchtungseinheit bekannt, welche in Dekor- beziehungsweise Pilzleuchten Verwendung finden kann. Die Beleuchtungseinheit sieht einen Schaltungsträger mit einer Mehrzahl von daran festgelegten Leuchtdioden als Lichtquellen sowie eine Optik zum Umlenken des abgestrahlten Lichts beziehungsweise zum Formen einer Lichtverteilung vor.

In ähnlicher Weise offenbart die US 2011/075412 A1 eine Beleuchtungseinheit, welche drei bezogen auf eine Längsrichtung der Beleuchtungseinheit versetzt angeordnete Schaltungsträger mit einer Mehrzahl von Leuchtdioden vorsieht. Jedenfalls zwei Schaltungsträgern und den diesen zwei Schaltungsträgern zugeordneten Leuchtdioden sind des Weiteren Reflektoroptiken zugeordnet, welche der Umlenkung des von den Leuchtdioden abgestrahlten Lichts und zum Formen einer Lichtverteilung dienen.

Aus der WO 2010/101405 A2 ist eine Beleuchtungseinheit bekannt, welche eine Mehrzahl von an einem Schaltungsträger festgelegten Leuchtdioden sowie eine Optik zum Umlenken des von den Leuchtdioden abgestrahlten Lichts in einer Lichtabstrahlrichtung vorsieht.

Aus der US 2012/139403 A1 ist eine Beleuchtungseinheit mit einem Schaltungsträger und einer Mehrzahl von an dem Schaltungsträger festgelegten Leuchtdioden als Lichtquellen bekannt. Die Beleuchtungseinheit weist darüber hinaus einen segmentiert ausgebildeten Kühlkörper und einen Lichtleiter zum Umlenken des von den Leuchtdioden abgestrahlten Lichts auf.

Aus der DE 20 2011 104 303 U1 ist ein als Tragkörper dienendes Aufnahmeprofil für ein Leuchtmittel, insbesondere einen LED-Streifen bekannt. Das Aufnahmeprofil ist ausgebildet zur variablen, situativen Montage des Leuchtmittel und bevorzugt als Strangpressprofil realisiert.

Aus der WO 86/07620 A1 ist ein im Wesentlichen oktaederförmig gebildetes Profil bekannt mit vier einander an gegenüberliegenden Seiten gegenüberliegenden, sichelförmigen Befestigungsmitteln, welche in einer Längsrichtung erstreckte, im Querschnitt stets gleiche Befestigungsaufnehmung aufweisen.

Aus der FR 2 843 187 A1 ist bekannt, eine Beleuchtungsvorrichtung über eine Halterung schwenkbar an einem langgestreckten Profilkörper festzulegen.

Aus der EP 1 293 724 A1 ist ein Lichtkanal mit einem U-förmigen Profilkörper bekannt, welcher symmetrisch in Bezug auf eine Quermittelebene ausgebildet ist und über eine Reihe von Rastelementen ein Leuchtmodul aufnehmen kann.

Aus der US 2009/0147521 A1 ist eine Dekorleuchte bekannt, bei der als Leuchtmittel ein Schaltungsträger mit einer Mehrzahl von daran montierten Leuchtdioden vorgesehen ist. Der Schaltungsträger ist im Wesentlichen horizontal erstreckt und trägt an einer Unterseite die Leuchtdioden. Das von den Leuchtdioden im Wesentlichen vertikal nach unten abgestrahlte Licht trifft auf eine den Lichtquellen gemeinsam zugeordnete, ortsfem zu dem Leuchtmittel vorgesehene Optik, welche nach Art eines kegelförmigen Körpers ausgebildet ist. Durch die Optik wird das Licht der Leuchtdioden umgelenkt und über seitliche Abschlussscheiben der Dekorleuchte abgestrahlt. Das Gehäuse der Dekorleuchte ist jedenfalls abschnittsweise und insbesondere im Bereich des Schaltungsträgers nach Art eines Kühlkörpers ausgebildet. Von den Leuchtdioden erzeugte Wärme wird insofern über das Gehäuse der Dekorleuchte abgeführt.

Aufgabe der vorliegenden Erfindung ist es, eine Beleuchtungseinheit als Leuchtmittel für eine Dekorleuchte derart weiterzubilden, dass eine einfache Montage beziehungsweise ein einfacher Austausch der Beleuchtungseinheit durchgeführt werden kann.

Insbesondere soll die Möglichkeit geschaffen werden, mit konventionellen Leuchtmitteln betriebene Dekorleuchten mit der Beleuchtungseinheit nachträglich auszustatten und so die hinsichtlich des Energieverbrauchs günstigen Leuchtdioden als Lichtquellen zu verwenden.

Zur Lösung der Aufgabe weist die Erfindung die Merkmale des Patentanspruchs 1 auf.

Der besondere Vorteil der Erfindung besteht darin, dass die erfindungsgemäße Beleuchtungseinheit alle optisch wirksamen Funktionskomponenten in einer gemeinsamen Baueinheit zusammenfasst. Die erfindungsgemäße Beleuchtungseinheit kann damit als Leuchtmittel dienen und nachträglich in eine bestehende Dekorleuchte eingebaut werden. Insbesondere umfasst die Beleuchtungseinheit einen im Wesentlichen horizontal erstreckten Schaltungsträger, eine Mehrzahl von auf einer Unterseite des Schaltungsträgers montierten Leuchtdioden sowie eine an den Schaltungsträger angelegte Optik. Der Schaltungsträger beziehungsweise die Optik können eine runde, ovale oder rechteckige Querschnittsgeometrie aufweisen. Die Leuchtdioden können am Umfang des Schaltungsträgers verteilt vorgesehen sein und somit eine homogenen Ausleuchtung der Umgebung begünstigen.

Insbesondere sieht somit bereits die Beleuchtungseinheit selbst eine definierte Relativposition zwischen dem Schaltungsträger und der Optik vor. Der Schaltungsträger ist unmittelbar an die Optik angesetzt und als Teil der Beleuchtungseinheit ausgeführt. Es wird insofern darauf verzichtet, Teile eines Gehäuses der Dekorleuchte als Optik zu verwenden beziehungsweise eine mehrteilige Beleuchtungsanordnung zu schaffen, bei der der Schaltungsträger mit den Lichtquellen einerseits und die Optik andererseits getrennt voneinander an die Dekorleuchte beziehungsweise an dem Gehäuse derselben montiert werden müssen.

Nach der Erfindung weist die Beleuchtungseinheit ein Ansteuermodul auf zum Ansteuern der Lichtquellen. Beispielsweise kann vorgesehen sein, dass wobei an dem Ansteuermodul eine elektrische Zuleitung beziehungsweise ein elektrisches Gegenkontaktmittel vorgesehen sind, welches mit einem Kontaktmittel des Schaltungsträgers verbindbar ist. Des Weiteren ist ein Trägerkörper vorgesehen, wobei an dem Trägerkörper der Schaltungsträger, die Optik und das Ansteuermodul festgelegt sind. Vorteilhaft ergibt sich hierdurch eine höhere Integration der Beleuchtungseinheit. Insbesondere können die elektrischen und mechanischen Funktionskomponenten zusammen mit der Optik und dem Schaltungsträger zu der Beleuchtungseinheit verbunden werden. Insgesamt kann insofern die Beleuchtungseinheit als Ganzes in die Dekorleuchte eingesetzt werden. Es sind lediglich eine elektrische Kontaktierung der Beleuchtungseinheit über die Zuleitung und ein mechanisches Festlegen der Beleuchtungseinheit in dem Gehäuse der Dekorleuchte oder an einem Mast der Dekorleuchte erforderlich. Eine Montage im eigentlichen Sinne, insbesondere das Einbauen einer Mehrzahl von Komponenten in die Dekorleuchte und das Ausrichten dieser Komponenten zueinander, ist demgegenüber beim Einsetzen der Beleuchtungseinheit in die Dekorleuchte nicht erforderlich.

Durch das Vorsehen einer erfindungsgemäßen Beleuchtungseinheit vereinfacht sich die Umrüstung gegenwärtig mit konventionellen Leuchtmitteln betriebener Dekorleuchten auf die LED-Technik, da das konventionelle Leuchtmittel direkt gegen die erfindungsgemäße Beleuchtungseinheit ausgetauscht werden kann. Insbesondere kann das Ansteuermodul mit der Zuleitung so ausgeführt sein, dass die elektrischen Schnittstellen erhalten bleiben. Insofern vereinfacht sich auch hier die Montage.

Nach der Erfindung sind geeignete Positioniermittel vorgesehen, um den Trägerkörper einerseits und das Ansteuermodul, den Schaltungsträger beziehungsweise die Optik andererseits relativ zueinander zu positionieren derart, dass in einer Montageposition eine lagefeste Zuordnung des Trägerkörpers zu der Optik, zu dem Schaltungsträger beziehungsweise zu dem Ansteuermodul gegeben ist. Vorteilhaft ergibt sich durch das Vorsehen der Positioniermittel eine Sicherung gegen eine Fehlmontage, welche insbesondere die Funktion und die optische Güte der Beleuchtungseinheit beeinträchtigen würde. Zudem ist gewährleistet, dass Optik, Schaltungsträger und Ansteuermodul einwandfrei zusammenarbeiten und wie vorgesehen an dem Trägerkörper festgelegt sind.

Nach einer Weiterbildung der Erfindung sind das Ansteuermodul und die Optik unmittelbar an dem Trägerkörper festgelegt. Entsprechend können an dem Ansteuermodul mit dem Trägerkörper einerseits beziehungsweise der Optik und dem Trägerkörper andererseits korrespondierend gestaltete Positioniermittel vorgesehen werden, welche eine Montage und Festlegung in einer einzigen, vorgesehenen Montageposition erlauben. Beispielsweise kann vorgesehen sein, dass der Schaltungsträger mittelbar an dem Trägerkörper und unmittelbar an der Optik beziehungsweise dem Ansteuermodul festgelegt ist. Der Schaltungsträger kann dann insbesondere bezogen auf die wichtige optische Schnittstelle relativ zur Optik positioniert beziehungsweise ausgerichtet werden. Da der Schaltungsträger in der Regel lediglich ein geringes Eigengewicht hat, ist eine unmittelbare Abstützung an dem Trägerkörper nicht zwingend. Eine unmittelbare Positionierung relativ zum Ansteuermodul gewährleistet überdies, dass das Kontaktmittel mit dem Gegenkontaktmittel zuverlässig und in einfacher Weise verbunden werden kann. Die relative Positionierung zum Trägerkörper ist gleichwohl gegeben, wenn der Trägerkörper relativ zur Optik beziehungsweise zum Ansteuermodul ausgerichtet ist und die Optik beziehungsweise das Ansteuermodul unmittelbar zum Trägerkörper positioniert sind.

Nach einer Weiterbildung der Erfindung kann der Trägerkörper langgestreckt ausgebildet sein und eine Längsausnehmung aufweisen. Das Ansteuermodul kann jedenfalls abschnittsweise in der Längsausnehmung des Trägerkörpers vorgesehen sein. Vorteilhaft ergibt sich durch das Vorsehen des Ansteuermoduls in der Längsausnehmung des Trägerkörpers eine sehr kompakte Anordnung. Insbesondere kann das Ansteuermodul in dem Trägerkörper verdeckt angeordnet sein, so dass es von einem außenstehenden Betrachter nicht beziehungsweise kaum wahrgenommen wird und das optische Erscheinungsbild der Dekorleuchte unabhängig vom Ansteuermodul erhalten bleibt.

Nach einer Weiterbildung der Erfindung ist als Teil der Beleuchtungseinheit ein Verschlusskörper vorgesehen, welcher mit dem Trägerkörper verbunden wird zum kraftbeziehungsweise formschlüssigen Festlegen der Optik, des Ansteuermoduls beziehungsweise des Schaltungsträgers. Insbesondere können der Verschlusskörper und der Trägerkörper verschraubt, verklipst oder durch andere geeignete Verbindungsmittel lösbar miteinander verbunden werden. Die Optik, der Schaltungsträger und ein dem Schaltungsträger zugeordneter Kühlkörper können zwischen dem Trägerkörper und dem Verschlusskörper festgelegt werden. Für die Verbindungsmittel, welche beispielsweise nach Art von Schrauben oder Befestigungsarmen ausgebildet sind, können an der Optik, dem Schaltungsträger beziehungsweise dem Ansteuermodul entsprechende Ausnehmungen beziehungsweise Durchgangsöffnungen vorgesehen sein.

Nach einer Weiterbildung der Erfindung kann die Beleuchtungseinheit über ein Anschlussmittel an der Dekorleuchte montierbar sein. Das Anschlussmittel kann insbesondere an dem Trägerkörper beziehungsweise an dem Verschlusskörper abnehmbar gehalten sein. Vorteilhaft vereinfacht sich die Montage der Beleuchtungseinheit an der Dekorleuchte durch das Vorsehen des Anschlussmittels. Insbesondere das Festlegen des Anschlussmittels an dem Trägerkörper beziehungsweise dem Verschlusskörper erlaubt die gleichermaßen exakte und einfache Positionierung der Beleuchtungseinheit in der Dekorleuchte. Insbesondere bei der werksseitigen Fertigung von Beleuchtungseinheiten, die als Ersatz für konventionelle Leuchtmittel in bestehenden Dekorleuchten eingebaut werden, ist es möglich, das Anschlussmittel an die Beleuchtungseinheit anzubauen und so die Montage der Beleuchtungseinheit an der Dekorleuchte zu vereinfachen. Ebenso kann vorgesehen sein, dass - etwa beim Austausch eines Leuchtmittels gegen ein identisch anderes Leuchtmittel - das Anschlussmittel an der Dekorleuchte verbleibt und lediglich die Verbindung zwischen Beleuchtungseinheit und Anschlussmittel gelöst wird zum Austauschen der Beleuchtungseinheit.

Optional kann vorgesehen sein, dass das Anschlussmittel als Teil der Dekorleuchte oder als Teil der Beleuchtungseinheit vorgesehen ist. Beispielsweise kann der Trägerkörper beziehungsweise der Verschlusskörper als Anschlussmittel dienen.

Aus den weiteren Unteransprüchen und der nachfolgenden detaillierten Beschreibung sind weitere Vorteile, Merkmale und Einzelheiten der Erfindung zu entnehmen. Dort erwähnte Merkmale können jeweils einzeln für sich oder in beliebiger Kombination erfindungswesentlich sein. Die Zeichnungen dienen lediglich beispielshaft der Klarstellung der Erfindung und haben keinen einschränkenden Charakter.

Anhand der beigefügten Zeichnungen wird die Erfindung nachfolgend näher erläutert. Dabei zeigt:
- Fig. 1: eine Seitenansicht einer erfindungsgemäßen Beleuchtungseinheit, welche als Leuchtmittel in eine Dekorleuchte, beispielsweise in eine Licht seitlich und nach unten abstrahlende Pilzleuchte, eingebaut werden kann,
- Fig. 2: eine Explosionsdarstellung der Beleuchtungseinheit nach Fig. 1,
- Fig. 3: eine Optik der Beleuchtungseinheit nach Fig. 1 in einer perspektivischen Ansicht,
- Fig. 4: einen langgestreckt ausgebildeten Trägerkörper der Beleuchtungseinheit nach Fig. 1 in einer perspektivischen Ansicht,
- Fig. 5: den Verschlusskörper nach Fig. 5 in einer Draufsicht,
- Fig.6: einen Verschlusskörper der Beleuchtungseinheit nach Fig. 1 in einer perspektivischen Ansicht,
- Fig.7: ein Ansteuermodul der Beleuchtungseinheit nach Fig. 1 in einer perspektivischen Ansicht,
- Fig. 8: eine Aufsicht aus den Trägerkörper der Beleuchtungseinheit mit dem darin festgelegten Ansteuermodul,
- Fig. 9: eine Seitenansicht der in Fig. 8 dargestellten teilmontierten Einheit,
- Fig. 10: eine Aufsicht auf den Trägerkörper mit dem darin festgelegten Ansteuermodul sowie der angesetzten Optik,
- Fig. 11: eine Unterseitenansicht eines Schaltungsträgers der Beleuchtungseinheit nach Fig. 1
- Fig. 12: eine Aufsicht auf die teilmontierte Einheit nach Fig. 10, wobei an die Optik zusätzlich der Schaltungsträger nach Fig. 11 und ein Kühlkörper angesetzt sind,
- Fig. 13: einen Längsschnitt durch die Beleuchtungseinheit nach Fig. 1 mit einem am Verschlusskörper festgelegten Anschlussmittel,
- Fig. 14: eine perspektivische Seitenansicht der Beleuchtungseinheit mit dem Anschlussmittel nach Fig. 12,
- Fig. 15: eine alternative Anschlusssituation für die Beleuchtungseinheit nach Fig. 1, wobei das Anschlussmittel an dem Trägerkörper festgelegt ist,
- Fig. 16: eine alternative Ausführungsform des Anschlussmittels für die Beleuchtungseinheit sowie die Beleuchtungseinheit selbst in einer perspektivischen Ansicht und
- Fig. 17: eine alternative Ausführungsform einer erfindungsgemäßen Beleuchtungseinheit.

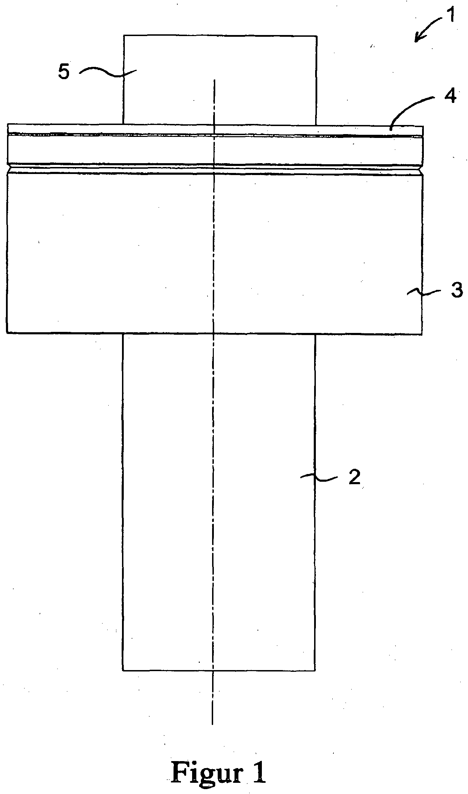

Eine erfindungsgemäße Beleuchtungseinheit 1 nach Fig. 1 umfasst als Design bestimmende Komponenten einen Trägerkörper 2, eine Optik 3 zum Formen einer vorgegebenen Lichtverteilung für die Beleuchtungseinheit 1, einen an die Optik 3 angelegten Kühlkörper 4 sowie einen Verschlusskörper 5, welcher über in Fig. 1 nicht dargestellte Verbindungsmittel 6 mit dem Trägerkörper 2 verbunden ist. Die Beleuchtungseinheit 1 dient beispielsweise als Leuchtmittel für eine Dekorleuchte, beispielsweise für eine Licht seitlich und nach unten abstrahlende Pilzleuchte oder eine andere Außenleuchte. Insbesondere kann die Beleuchtungseinheit 1 über ein in der Fig. 1 nicht dargestelltes Anschlussmittel 7, 8 an einem Gehäuse oder einem Masten der Dekorleuchte festgelegt werden.

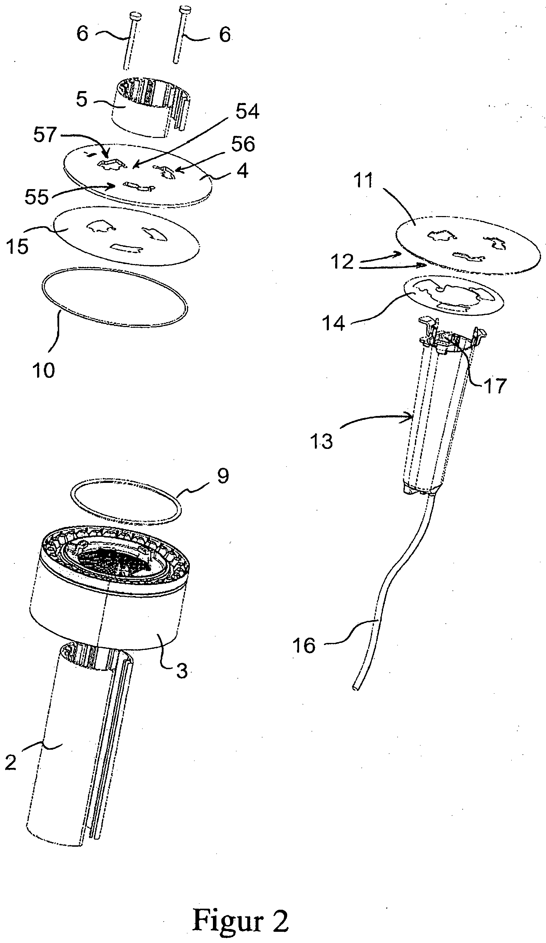

Fig. 2 verdeutlicht den grundsätzlichen Aufbau der Beleuchtungseinheit 1. Neben dem Trägerkörper 2, der Optik 3, dem Kühlkörper 4 sowie dem Verschlusskörper 5 sind als weitere Komponenten eine innere Dichtung 9, eine äußere Dichtung 10, ein Schaltungsträger 11 mit einer Mehrzahl von hieran festgelegten Lichtquellen 12, ein Ansteuermodul 13 sowie eine erste Isolationsfolie 14 und eine zweite Isolationsfolie 15 vorgesehen. Ferner sind in der Explosionsdarstellung nach Fig. 2 Schrauben als Vierbindungsmittel 6 dargestellt.

Der Schaltungsträger 11 ist nach Art einer im Wesentlichen kreisscheibenförmigen Platine realisiert. Die erste Isolationsfolie 14 sowie die zweite Isolationsfolie 15 werden an den gegenüberliegenden Flachseiten des Schaltungsträgers 11 angelegt zur Realisierung einer elektrischen Isolierung des Schaltungsträgers 11 sowie von an dem Schaltungsträger 11 vorgesehenen, nicht dargestellten elektrischen Leitern. Die Isolationsfolien 14, 15 sind bevorzugt so ausgeführt, dass eine zuverlässige und ausreichende elektrische Isolierung gewährleistet ist und zudem eine gute thermische Leitfähigkeit realisiert wird. Im montierten Zustand der Beleuchtungseinheit 1 ist der Schaltungsträger 11 im Wesentlichen horizontal erstreckt. Die Lichtquellen 12 sind auf einer Unterseite des Schaltungsträgers 11 montiert.

An dem Ansteuermodul 13 sind zum einen eine elektrische Zuleitung 16 und zum anderen ein elektrisches Gegenkontaktmittel 17 vorgesehen. Die elektrische Zuleitung 16 dient dem Anschluss des Ansteuermoduls 13 beziehungsweise der Beleuchtungseinheit 1 an eine im Bereich der Dekorleuchte vorgesehene Versorgungsleitung. Das Gegenkontaktmittel 17 dient der elektrisch leitenden Verbindung des Ansteuermoduls 13 mit dem Schaltungsträger 11. Der Schaltungsträger 11 weist zu diesem Zweck ein korrespondierend gestaltetes elektrisches Kontaktmittel 18 auf, welches aufgrund der Darstellungsperspektive verdeckt an einer Unterseite des Schaltungsträgers 11 vorgesehen ist.

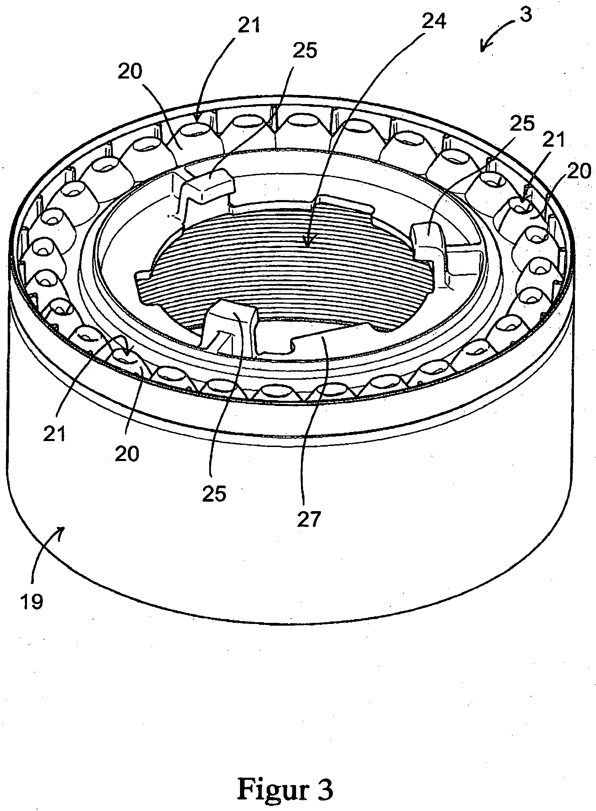

Der detaillierte Aufbau der Optik 3, des Trägerkörpers 2, des Verschlusskörpers 5, des Ansteuermoduls 13 und des Schaltungsträgers 11 ist in den Fig. 3 bis 7 sowie 11 dargestellt.

Die Optik 3 weist eine im Wesentlichen zylindrische Außenmantelfläche 19 auf. Ein Außendurchmesser der Optik 3 liegt typischerweise im Bereich zwischen 100 mm und 180 mm. Eine Höhe der Optik 3 beträgt 20 mm oder mehr. Auf einer in montierten Zustand dem Schaltungsträger 11 zugewandten Stirnseite ist an der Optik 3 im Bereich des Außenumfangs eine Vielzahl von regelmäßig angeordneten Lichteinkoppelelementen 20 ausgeformt. Die Lichteinkoppelelemente 20 weisen jeweils eine tropfenbeziehungsweise hügelartige Form und eine Ausnehmung 21 auf. Die Ausnehmung 21 dient der Aufnahme der Lichtquellen 12. Insofern ist im Bereich der Ausnehmung 21 des Lichteinkoppelelements 20 eine Lichteinkoppelfläche für das von der Lichtquelle 12 abgestrahlte Licht vorgesehen.

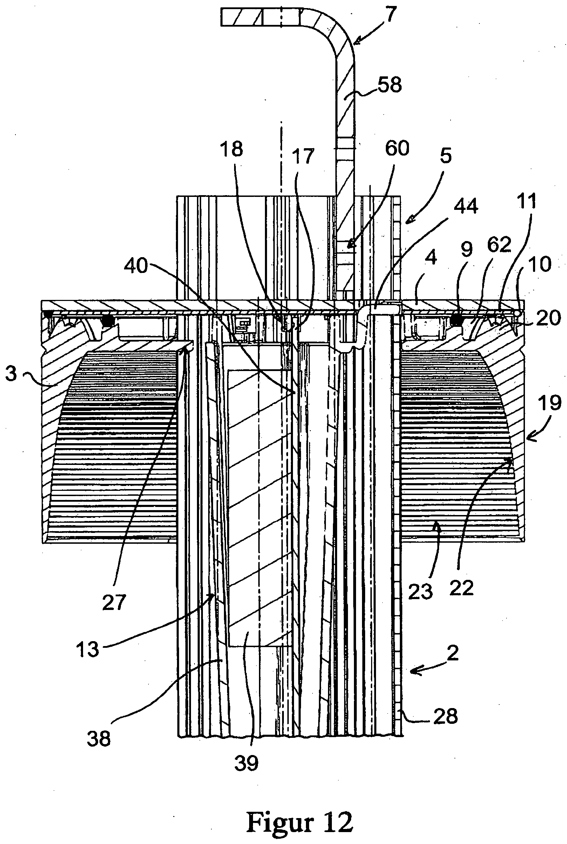

Die Optik 3 wirkt nach Art eines Lichtleiters. In der Optik 3 wird über die Lichteinkoppelfläche einkoppeltes Licht an einer innenliegenden, in Fig. 12 dargestellten Lichtauskoppelfläche 22 in Richtung der Außenmantelfläche 19 umgelenkt und über die Außenmantelfläche 19 abgestrahlt. Die Geometrie der Optik 3 und insbesondere die Geometrie der Lichteinkoppelfläche und der Lichtauskoppelfläche 22 sind dabei so bestimmt, dass das über die Außenmantelfläche 19 abgestrahlte Licht im Wesentlichen seitlich und nach unten abgestrahlt wird. Die Geometrie der optisch wirksamen Flächen, insbesondere der Lichteinkoppelfläche, der Lichtauskoppelfläche 22 und der Außenmantelfläche 19, ist dabei so gewählt, dass sich eine geringe Blendwirkung ergibt.

Die Optik 3 weist auf einer den Lichteinkoppelelementen 20 abgewandten Seite eine schalenförmige Ausnehmung 23 sowie in einem zentralen Bereich eine Durchgangsöffnung 24 auf. Die Durchgangsöffnung 24 sowie die schalenförmige Ausnehmung 23 dienen insbesondere dazu, den Trägerkörper 2 aufzunehmen. Zudem ist im Bereich der Durchgangsöffnung 24 die elektrische Kontaktierung des Ansteuermoduls 13 und des Schaltungsträgers 11 über das Kontaktmittel 18 und das Gegenkontaktmittel 17 realisiert. Im, Bereich der Durchgangsöffnung 24 sind drei am Umfang der Durchgangsöffnung 24 verteilt angeordnete, L-förmige Kragarme 25 vorgesehen. Im Bereich der Kragarme 25 stützt sich die Optik 3 stirnseitig an den Trägerkörper 2 ab. Hinsichtlich einer Längsrichtung 26 des Trägerkörpers 2 ergibt sich hierdurch eine definierte Zuordnung von Trägerkörper 2 und Optik 3 im montierten Zustand. Ferner ist im Bereich der Durchgangsöffnung 24 eine Nase 27 ausgebildet. Die Nase 27 dient der korrekten Positionierung der Optik 3 am Trägerkörper 2 in Umfangsrichtung.

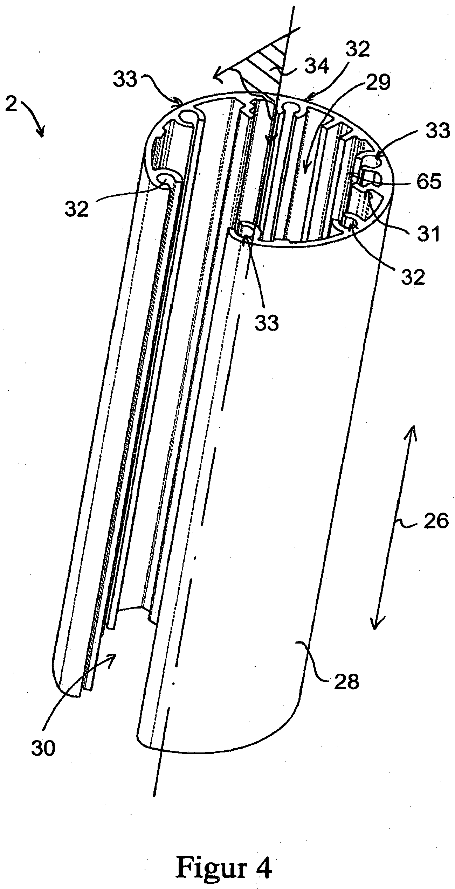

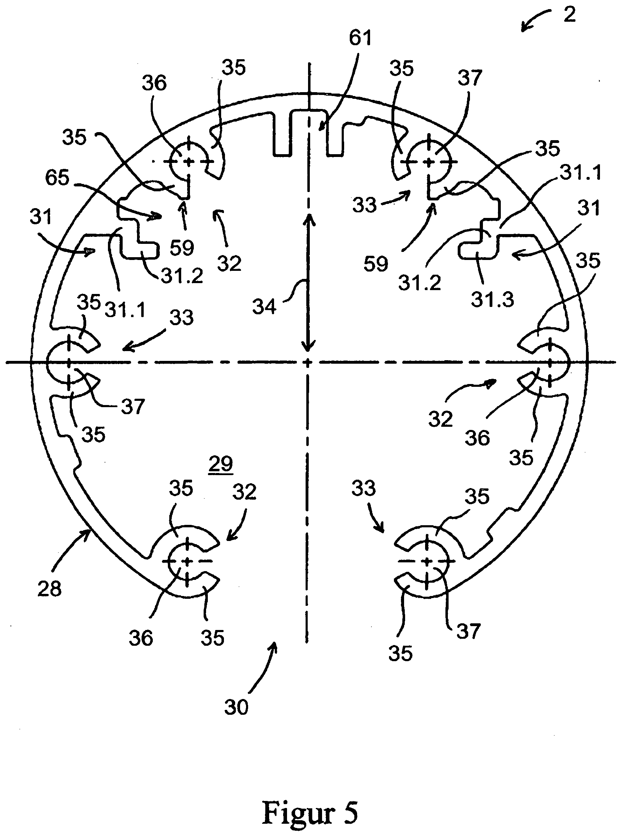

Der Trägerkörper 2 ist gemäß der Fig. 4 und 5 in die Längsrichtung 26 längserstreckt ausgebildet. Über eine gesamte Länge weist der Trägerkörper 2 einen gleichen Querschnitt auf. Insbesondere ist der Trägerkörper 2 aus einem Strangpress-, Extrusions- oder Gussprofil hergestellt. Der Trägerkörper 2 ist bevorzugt aus einem Material mit guten Wärmeleiteigenschaften, beispielsweise aus einem metallischen Werkstoff, gefertigt.

Die Geometrie des Trägerkörpers 2 wird insbesondere durch eine äußere Wandung 28 und eine von der äußeren Wandung 28 umgebene Längsausnehmung 29 bestimmt. Die Wandung 28 weist eine sich in die Längsrichtung 26 des Trägerkörpers 2 erstreckende Längsnut 30 auf. Mantelseitig besitzt der Trägerkörper 2 im Bereich der Wandung 28 einen kreisförmigen Querschnitt. Von der Wandung 28 ragt nach innen in Richtung der Längsausnehmung 29 eine Mehrzahl von Positioniermitteln 31 und Befestigungsmittel 32, 33 ab. Wie insbesondere die Draufsicht nach Fig. 5 erkennen lässt, sind die Positioniermittel 31 abgewinkelt und Z-förmig ausgebildet. In Bezug auf eine Quermittelebene 34 des Trägerkörpers 2 sind die Positioniermittel 31 gegenüberliegend und symmetrisch angeordnet. Jeweils erstrecken sich die Positioniermittel 31 in die Längsrichtung 26 und über die gesamte Länge des Trägerprofils 2.

Insgesamt sechs Befestigungsmittel 32, 33 sind regelmäßig verteilt am Umfang der Wandung 28 unter einem Winkel von 60° vorgesehen. Die Befestigungsmittel 32, 33 sind in die Längsrichtung 26 des Trägerkörpers 2 orientiert und erstrecken sich über die gesamte Länge des Trägerkörpers 2. Jedes Befestigungsmittel 32, 33 wird gebildet durch zwei sichelförmige beziehungsweise halbschalenförmige Randabschnitte 35, welche paarweise von der Wandung 28 abragen und jeweils eine in die Längsrichtung 26 des Trägerkörper 2 erstreckte, im Querschnitt kreisförmige Befestigungsausnehmung 36, 37 definieren.

Während die Befestigungsmittel 32, 33 im Grundsatz gleich geformt sind, weisen insgesamt drei erste Befestigungsmittel 32 eine im Querschnitt kleine erste Befestigungsausnehmung 36 und drei zweite Befestigungsmittel 33 eine im Querschnitt größere zweite Befestigungsausnehmung 37 auf. Die ersten Befestigungsmittel 32 und die zweiten Befestigungsmittel 33 sind am Umfang alternierend vorgesehen. Jeweils befinden sich die Befestigungsmittel 32, 33 einander paarweise zugeordnet auf gegenüberliegenden Seiten der Quermittelebene 34, wobei stets ein erstes Befestigungsmittel 32 gegenüberliegend zu einem zweiten Befestigungsmittel 33 vorgesehen ist. Beispielsweise kann an dem Befestigungsmittel ein Gewinde beziehungsweise ein Gewindeabschnitt vorgesehen sein zur Aufnahme einer nicht selbstschneidenden Schraube.

Eine zur Festlegung eines ersten Anschlussmittels 7 ausgebildete Aufnahme 65 wird definiert durch zwei der Längsnut 30 gegenüberliegende und auf unterschiedlichen Seiten der Quermittelebene 34 vorgesehene Befestigungsmittel 32, 33 sowie die Positioniermittel 31. In die Aufnahme 65 kann das Anschlussmittel 7, welches beispielsweise nach Art eines Flachstahls ausgeführt sein kann, eingesetzt werden. Um eine exakte Positionierung des Anschlussmittels 7 in der Aufnahme 65 zu erreichen, sind an den zwei durch die gebogenen Randabschnitte 35 gebildeten Befestigungsmitteln 32, 33 ebene Anlageflächen 59 ausgebildet.

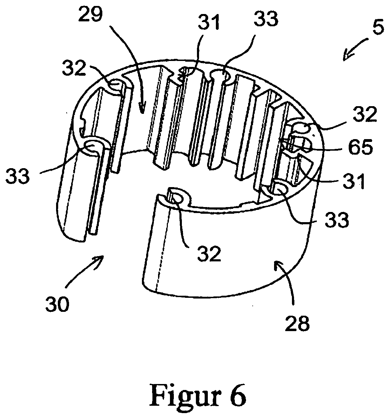

Der Verschlusskörper 5 nach Fig. 6 wird exemplarisch aus dem gleichem Strangprofil hergestellt wie der Trägerkörper 2. Er ist lediglich in die Längsrichtung 26 kürzer ausgeführt als der Trägerkörper 2. Insbesondere sind an dem Trägerkörper 2 und dem Verschlusskörper 5 die gleichen Positioniermittel 31 und die gleichen Befestigungsmittel 32, 33 vorgesehen.

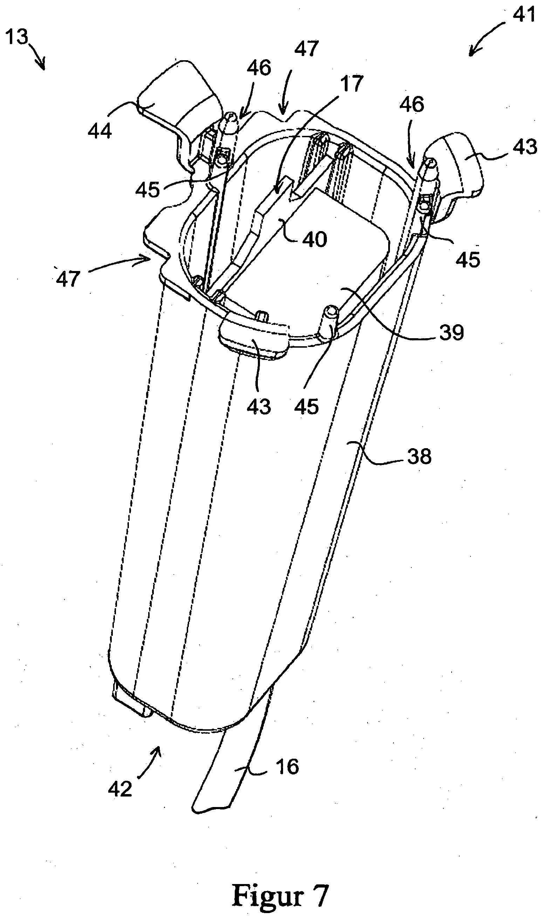

Das Ansteuermodul 13 umfasst gemäß Fig. 7 ein äußeres Gehäuse 38 aus einem insbesondere elektrisch nicht leitenden Werkstoff, beispielsweise aus Kunststoff, und eine im Inneren des Gehäuses 38 vorgesehene vergossene Elektronik. Dargestellt ist insofern ein Vergusskörper 39 und eine aus dem Vergusskörper 39 herausgeführte Platine 40, welche die Elektronik sowie das Gegenkontaktmittel 17 trägt. Über eine offene Stirnseite 41 des Gehäuses 38 ist die Platine 40 mit dem Gegenkontaktmittel 17 zugängig. Im Bereich einer der Stirnseite 41 gegenüberliegenden zweiten Stirnseite 42 ist an dem Gehäuse 38 eine Öffnung für die Zuleitung 16 vorgesehen.

Das Gehäuse 38 des Ansteuermoduls 13 ist langgestreckt ausgebildet. Hinsichtlich seiner Außengeometrie ist das Gehäuse 38 so realisiert, dass es in die Längsausnehmung 29 des Trägerkörpers 2 eingesetzt werden kann. Im Bereich der Stirnseite 41 sind an dem Gehäuse 38 nach außen abragende Kragarme 43, 44 vorgesehen. Die Kragarme 43, 44 sind so gestaltet, dass das Gehäuse 38 mit den Kragarmen 43, 44 stirnseitig an dem Trägerkörper 2 angelegt und so in dessen Längsrichtung 26 definiert positioniert ist.

An dem Gehäuse 38 des Ansteuermoduls 13 sind des Weiteren im Bereich der Stirnseite 41 abragende Positioniermittel 45, 46 vorgesehen. Ein erstes im Bereich der Stirnseite 41 vorgesehenes Positioniermittel 45 ragt domartig von der Stirnseite 41 des Gehäuses 38 ab und definiert ein Anlageplateau für den Schaltungsträger 11. Ein zweites Positioniermittel 46, welches ebenfalls dornartig ausgebildet ist, überragt das Positioniermittel 45. Es ist nach Art eines Positionierstifts 46 ausgebildet und definiert eine relative Lage zwischen dem Ansteuermodul 13, dem Schaltungsträger 11 und dem Kühlkörper 4.

Ebenfalls im Bereich der Stirnseite 41 ist mantelseitig ein weiteres Positioniermittel 47 ausgebildet. Das weitere Positioniermittel 47 dient zum Anlegen des Gehäuses 38 an den Trägerkörper 2. Das zweite Positioniermittel 47 ist so ausgebildet, dass es an die zwei Positioniermittel 31 des Trägerkörpers 2 angelegt wird.

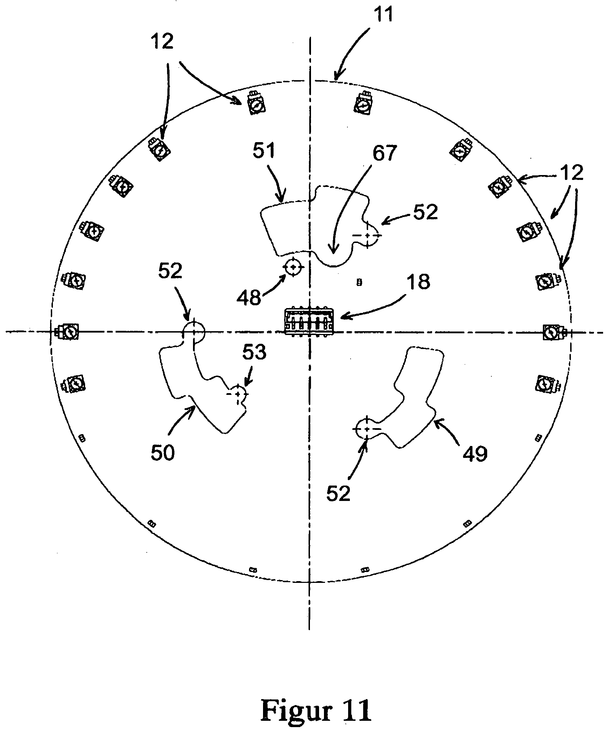

Der kreisscheibenförmige Schaltungsträger 11 nach Fig. 11 weist randseitig eine Mehrzahl von elektrisch kontaktierten und zueinander beabstandet angeordneten Lichtquellen 12 auf. Ferner ist an dem Schaltungsträger 11 das Kontaktelement 18 festgelegt. Das Kontaktelement 18 ist so ausgebildet, dass es beim Anlegen des Schaltungsträgers 11 an das Ansteuermodul 13 elektrisch leitend sowie mechanisch mit dem Gegenkontaktmittel 17 verbunden ist.

Des Weiteren ist an dem Schaltungsträger eine Mehrzahl von Durchgangsausnehmungen 48, 49, 50, 51 ausgebildet. Die Durchgangsausnehmung 48 weist einen kreisförmigen Querschnitt auf und dient als Positioniermittel 48 zur Aufnahme des Positionierstifts 46 des Ansteuermoduls 13. Die Durchgangsausnehmung 49 ist so gestaltet, dass ein erster, an der Optik 3 vorgesehener Kragarm 25 sowie ein erster an dem Ansteuermodul 13 vorgesehener Kragarm 43 positionsgenau in die Durchgangsausnehmung eingesetzt werden können. Insofern dient auch die Durchgangsausnehmung 49 als Positioniermittel im Sinne der Erfindung. Ähnlich wie die Durchgangsausnehmung 49 dient auch die weitere Durchgangsausnehmung 50 der Aufnahme des Kragarms 25 der Optik 3 sowie der Aufnahme des Kragarms 43 des Ansteuermoduls 13. Die Durchgangsausnehmung 51 des Schaltungsträgers11 dient einerseits der Aufnahme des Kragarms 25 der Optik 3. Des Weiteren dient die Durchgangsausnehmung 51 der Aufnahme des Kragarms 44 des Ansteuermoduls 13. Insofern fungiert auch die Durchgangsausnehmung 51 als Positioniermittel im Sinne der Erfindung. Jeweils sind die Durchgangsausnehmungen 48, 49, 50, 51 so gestaltet, dass die Optik 3 sowie das Ansteuermodul 13 in einer definierten relativen Lage zum Schaltungsträger 11 positioniert sind.

Im Bereich der Durchgangsausnehmungen 49, 50, 51 sind des Weiteren jedenfalls abschnittsweise kreisförmig begrenzte Ausformungen 52, 53 vorgesehen. Die Ausformungen 52 sind ebenfalls nach Art von Durchbrüchen in dem Schaltungsträger 11 realisiert. Sie dienen dazu, die Verbindungsmittel 6 zum Festlegen des Verschlusskörpers 5 an dem Trägerkörper 2 aufzunehmen. Eine weitere, ebenfalls abschnittsweise kreisförmig begrenzte Ausformung 53 ist an der weiteren Durchgangsausnehmung 50 vorgesehen. Sie dient wie die im Querschnitt kreisförmige Durchgangsausnehmung 48 der Aufnahme eines Positionsstifts 46 des Ansteuermoduls 13.

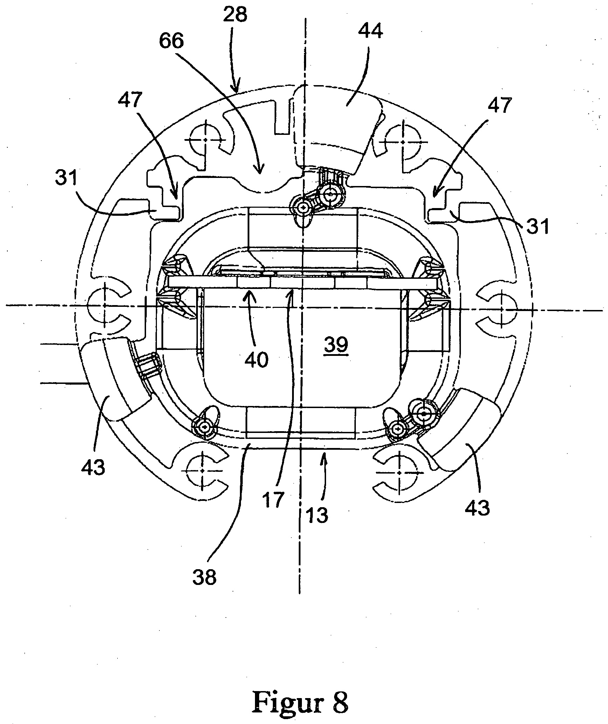

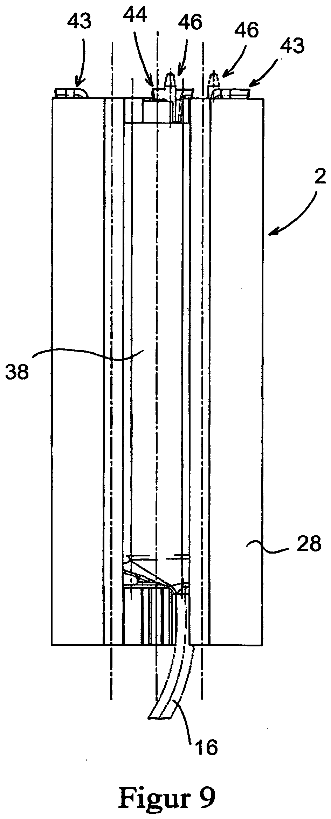

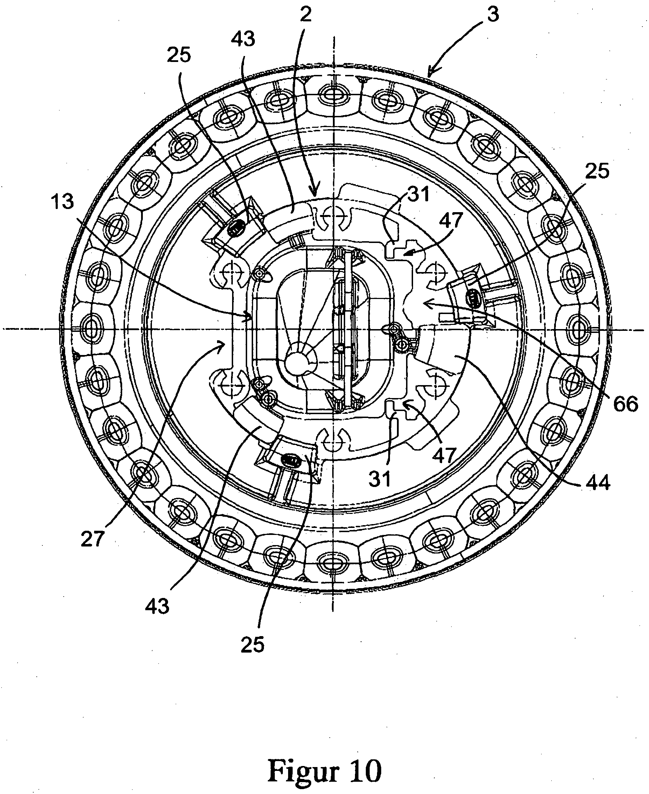

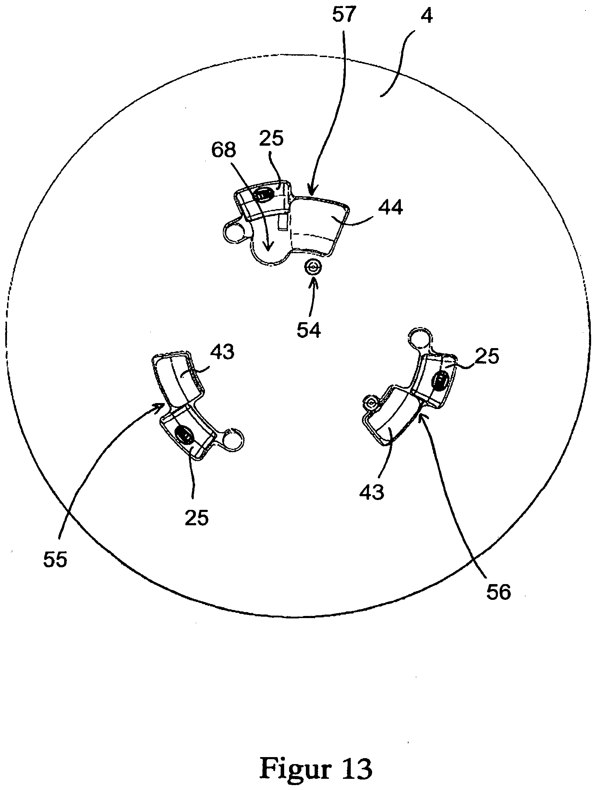

Teilmontierte Zustände der Beleuchtungseinheit 1 nach den Fig. 8, 9, 10 sowie 13 verdeutlichen den Zusammenbau der Beleuchtungseinheit 1. Die Optik 3 ist so an den Trägerkörper 2 sowie das Ansteuermodul 13 angesetzt, dass die Nase 27 der Optik 3 in die Längsnut 30 des Trägerkörpers 2 eingreift. Des Weiteren umgreifen die Kragarme 25 der Optik 3 die Wandung 28 des Trägerkörpers 2 von außen im Bereich einer Stirnseite des Trägerkörpers 2. Das Ansteuermodul 13 ist mit der Zuleitung 16 sowie der Stirnseite 42 voran so in die Längsausnehmung 29 des Trägerkörpers 2 eingesetzt, dass sich die Kragarme 43, 44 des Ansteuermoduls 13 auf der Stirnseite des Trägerkörpers 2 im Bereich der Wandung 28 abstützen. Eine lagefeste Zuordnung von Trägerkörper 2 und Ansteuermodul 13 ergibt sich, indem sich das im Bereich der Stirnseite 41 des Ansteuermoduls 13 vorgesehene Positioniermittel 47 an die Z-förmigen Positioniermittel 31 des Trägerkörpers 2 anlegt. Die Kragarmen 43, 44 des Ansteuermoduls 13 sind dabei unmittelbar benachbart zu den Kragarme 25 der Optik 3 vorgesehen. Der Optikkörper 3 ist damit mit der Nase 27 relativ zum Trägerkörper 2 und zusätzlich über die Kragarme 25 relativ zum Ansteuermodul 13 festgelegt beziehungsweise positioniert. Insofern ist der Trägerkörper 2 mit dem hierin festgelegten Ansteuermodul 13 innenliegend vorgesehen und von der Optik 3 umgeben. Trotz der tragenden Funktion des Trägerkörpers 2 kommt es insofern zu keiner Abschattung des Lichts.

Der Schaltungsträger 11 ist so an den Trägerkörper 2, die Optik 3 und das Ansteuermodul 13 angelegt, dass die Positionierstifte 46 in die Durchgangsausnehmung 48 sowie die Ausformung 53 eingreifen. Des Weiteren umgreifen die drei Durchgangsausnehmungen 49, 50, 51 die Kragarme 25, 43,44 der Optik 3 und des Ansteuermodul 13. Der Schaltungsträger 11 ist insofern ebenfalls in einer definierten Position relativ zu Optik 3, dem Trägerkörper 2 und dem Ansteuerungsmodul 13 festgelegt. Der Kühlkörper 4, der nach der Montage des Schaltungsträgers 11 montiert wird, weist zu den Durchgangsausnehmungen 48, 49, 50, 51 korrespondierende Durchgangsausnehmungen 54, 55, 56, 57 auf und umgreift dementsprechend die Positionierstifte 46 sowie die Kragarme 25, 43, 44 wie der Schaltungsträger 11. Entsprechend gelingt es, den Kühlkörper 4 in einer festen Relativposition zum Schaltungsträger 11, zur Optik 3, zum Ansteuerungsmodul 13 und zum Trägerkörper 2 zu positionieren.

Die teilmontierten Baugruppen der Beleuchtungseinheit 1 nach den Fig. 8, 9, 10 und 13 zeigen nicht die Montage der Dichtungen 9, 10 und der Isolationsfolie 14,15. Vorgesehen ist, dass die innere Dichtung 9 an die Optik 3 angelegt wird und dass die erste Isolationsfolie 14 zwischen den Ansteuermodul 13 und dem Schaltungsträger 11 verbaut wird. Sobald der Schaltungsträger 11 über die Positioniermittel 43, 44, 45, 46, 48, 49, 50, 51 relativ zum Ansteuermodul 13 beziehungsweise zur Optik 3 festgelegt und das Kontaktmittel 18 mechanisch und/oder elektrisch mit dem Gegenkontaktmittel 17 verbunden ist, wird zunächst die zweite Isolationsfolie 15 an den Schaltungsträger 11 angelegt und anschließend der Kühlkörper 4 montiert. Abschließend wird darin, wie insbesondere Fig. 2 deutlich macht, der Verschlusskörper 5 an den Kühlkörper 4 so angelegt, dass die Schrauben 6 durch die an dem Verschlusskörper 5 vorgesehenen zweiten Befestigungsausnehmungen 37 des zweiten Befestigungsmittels 33, die Durchgangsausnehmungen 55, 56, 57 des Kühlkörpers 4 und die an den Durchgangsausnehmungen 49, 50, 51 des Schaltungsträgers 11 vorgesehenen Ausformungen 52 geführt und in die ersten Befestigungsausnehmungen 36 des Trägerkörpers 2 eingeschraubt werden können. Die Schrauben 6 sind hierzu vorzugsweise als selbstschneidende Gewindeschrauben 6 ausgeführt. Der Verschlusskörper 5 ist hierbei - bezogen auf die Quermittelebene 34 - um 180° gedreht zum Trägerkörper 2 angeordnet mit der Folge, dass die ersten Befestigungsmittel 32 des Verschlusskörpers 5 über den zweiten Befestigungsmitteln 33 des Trägerkörpers und andersherum positioniert sind.

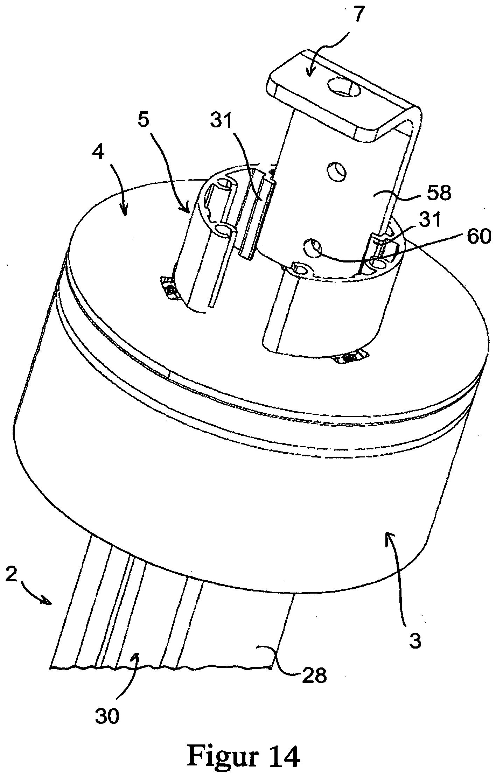

Die Fig. 12 und 14 zeigen die Beleuchtungseinheit 1 mit dem Anschlussmittel 7, welches im Bereich des Verschlusskörpers 5 an die Beleuchtungseinheit 1 festgelegt ist und zum Anschluss der Beleuchtungseinheit 1 an ein Gehäuse oder einen Masten der Dekorleuchte dient. Das Anschlussmittel 7 ist als separates Bauteil ausgeführt und exemplarisch nach Art eines L-förmigen Winkelblechs ausgebildet. Das Anschlussmittel 7 wird mit einem langen Schenkel desselben in die Aufnahme 65 eingesetzt und an dem Verschlusskörper 5 festgelegt, wobei der lange Schenkel 58 an die Positioniermittel 31 des Verschlusskörpers 5 angelegt wird. Des Weiteren ergibt sich eine Führung durch die zwei Anlageflächen 59, welche an dem benachbart zu dem Positioniermittel 31 vorgesehenen ersten Befestigungsmittel 32 und zweiten Befestigungsmittel 33 des Trägerkörpers 2 ausgebildet sind, vergleiche Fig. 5.

Aufgrund der Z-förmigen Stufung der beiden Positioniermittel 31 des Trägerkörpers 2 kann entweder ein breites, dünnes Winkelprofil oder ein schmaleres, aber dicker ausgeführtes Anschlussmittel 7 formschlüssig in die Aufnahme 65 eingesetzt werden. Die Z-förmige Positioniermittel 31 sind mit einem ersten Schenkel 31.1 an die Wandung 28 angeformt. Unter einem rechten Winkel zum ersten Schenkel 31.1 erstreckt sich ein Verbindungsschenkel 31.2. Von dem Verbindüngsschenkel 31.2 ragt endseitig ein freier Schenkel 31.3 ab, welcher sich parallel oder im Wesentlichen parallel zu dem ersten Schenkel 31.1. erstreckt. Während der Verbindungsschenkel im Wesentlichen parallel zur Quermittelebene 34 vorgesehen ist, sind der erste Schenkel 31.1 und der freie Schenkel 31.3 senkrecht zur Quermittelebene vorgesehen.

Beim Einsetzen des breiten, dünnen Anschlussmittels 7 in die Aufnahme 65 ergibt sich eine Anlage an den zwei Anlageflächen 59 und an den zwei der Wandung 28 zugewandten ersten Schenkeln 31.1 der Positioniermittel 31. Ist das Anschlussmittel 7 demgegenüber weniger breit, aber dicker ausgeführt, stützt es sich an den Anfageflächen 59 und an den der Wandung 28 abgewandten, freien Schenkeln 31.3 des Z-förmigen Positioniermittel 31 ab.

Eine Festlegung des Anschlussmittels 7 an dem Verschlusskörper 5 erfolgt beispielsweise, indem durch eine an dem Verschlussmittel 7 vorgesehene Bohrung 60 eine Schraube oder ein anderes geeignetes Verbindungsmittel angesetzt und an einer Profilierung 61 des Verschlusskörpers 5 festgelegt wird.

Die Schnittdarstellung nach Fig. 12 zeigt, wie die Lichtquellen 12 in einen abgedichteten Hohlraum 62 der Beleuchtungseinheit 1 angeordnet sind. Der abgedichtete Hohlraum 62 wird gebildet, indem der Schaltungsträger 11 mit den Lichtquellen 12 an die Optik 3 angelegt wird. Zwischen dem Schaltungsträger 11 und der Optik 3 sind die Dichtungen 9, 10 umlaufend so vorgesehen, dass der Hohlraum 62 abgedichtet und die Lichtquelle 12 vor Witterungseinflüssen geschützt in dem Hohlraum 62 vorgesehen ist.

Indem der Trägerkörper 2 beziehungsweise der Verschlusskörper 5 aus einem thermisch leitenden Werkstoff, bevorzugt aus einem metallischen Werkstoff hergestellt sind, kann ein durchgängiger thermischer Pfad vom Trägerkörper 2 über den Schaltungsträger 11 und den Kühlkörper 4 bis zu dem Verschlusskörper 5 bereitgestellt werden. Der thermische Pfad kann weiter verlängert werden, wenn die Beleuchtungseinheit 1 wie vorgesehen im Bereich des Verschlusskörpers 5 oder des Trägerkörpers 2 thermisch leitend mit der Dekorleuchte verbunden wird. Da insbesondere eine Montage der Beleuchtungseinheit 1 an dem Gehäuse beziehungsweise Masten der Dekorleuchte vorgesehen ist, kann auf diese Weise Wärme gleichermaßen zuverlässig und einfach abgeführt werden.

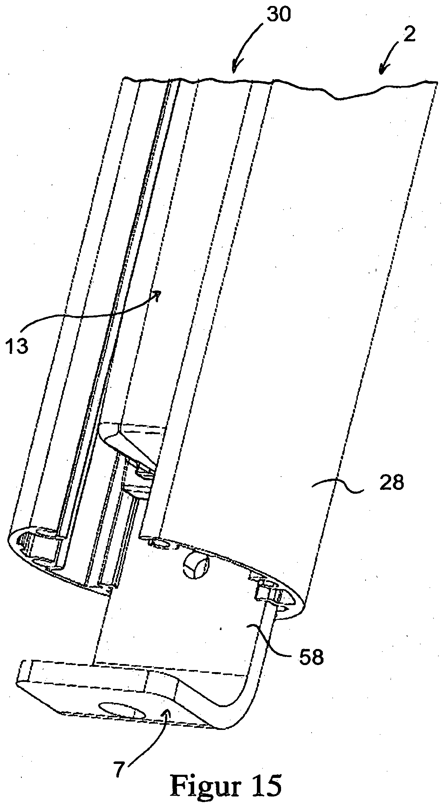

Nach einer alternativen Befestigungsvariante gemäß Fig. 15 ist vorgesehen, das L-förmige Anschlussmittel 7 mit dem langen Schenkel 58 voran an dem Trägerkörper 2 festzulegen. In bekannter Weise wird hierzu der Schenkel 58 zwischen dem Positioniermittel 31 und der Anlagefläche 59 angelegt und über die Bohrung 60 mit einer nicht dargestellten Schraube oder einem anderen Verbindungsmittel in der Profilierung 61 gehalten. Wahlweise kann demzufolge die Beleuchtungseinheit 1 im Bereich des Verschlusskörpers 5 oder dem Trägerkörper 2 an der Dekörleuchte verschraubt werden.

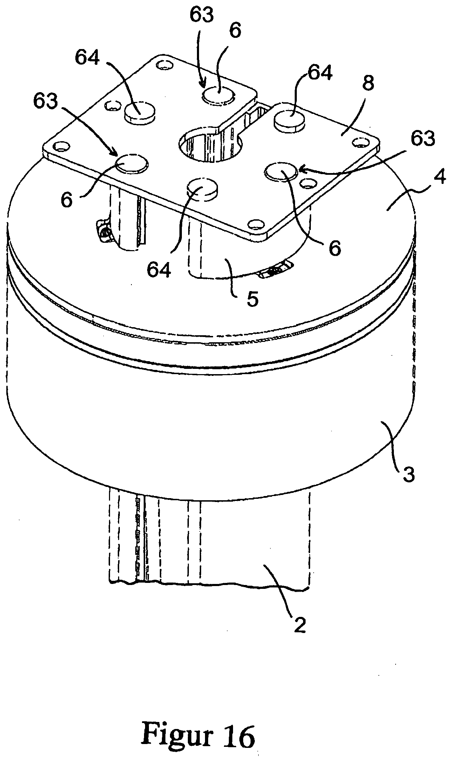

Eine alternative Befestigungsmöglichkeit bietet das Anschlussmittel 8 nach Fig. 16. Hier wird - exemplarisch dargestellt für den Verschlusskörper 5 - ein im Wesentlichen ebenes und rechteckig ausgebildetes Blech als Anschlussmittel 8 vorgesehen. Das Blech 8 weist zunächst drei Bohrungen auf, welche im Durchmesser so bestimmt sind, dass die Schrauben 6 zum Festlegen des Verschlusskörpers 5 an dem Trägerkörper 2 durch die Ausnehmungen 63 geführt werden können. Im montierten Zustand sind hierbei die Köpfe der Schrauben 6 in den Ausnehmungen 63 versenkt. Des Weiteren sind drei Bohrungen vorgesehen zur Aufnahme von Schrauben 64, welche dazu dienen, das Anschlussmittel 8 stirnseitig an dem Verschlusskörper 5 zu verschrauben. Die Schrauben 64 sind hierzu vorzugsweise als selbstschneidende Gewindeschrauben ausgeführt und so dimensioniert, dass eine Festlegung an dem ersten Befestigungsmittel 32 des Verschlusskörpers 5 erfolgt. Wie gehabt ist das Anschlussmittel 8 als separates Bauteil ausgeführt, welches lösbar mit der Beleuchtungseinheit 1 beziehungsweise dem Trägerkörper 2 oder dem Verschlusskörper 5 verbunden werden kann. Die Geometrie des Anschlussmittels 8 ist nur exemplarisch gewählt. Es kann beispielsweise ein rundes Blech als Anschlussmittel 8 dienen.

Sofern die Beleuchtungseinheit 1 im Bereich des Verschlusskörpers 5 festgelegt wird, kann die Zuleitung 16 ebenfalls über den Verschlusskörper 5 zu dem Gehäuse der Dekorleuchte geführt werden. Zu diesem Zweck wird die Zuleitung 16 vorgesehen in einem sich in die Längsrichtung 26 erstreckenden Montageraum 66, der zwischen dem Ansteuermodul 13 einerseits und dem Trägerkörper 2 andererseits vorgesehen ist. Weiter sieht der Schaltungsträger 11 an der Durchgangsausnehmung 51 eine Ausformung 67 für die Zuleitung 16 vor. Eine korrespondierende Ausformung 68 befindet sich in analoger Weise an dem Kühlkörper 4. Die über den Montageraum 66 nach oben geführte Zuleitung 16 wird insofern im Bereich der Ausformung 67, 68 vorgesehen und in den Verschlusskörper 5 geführt. Insbesondere gelingt es hierdurch, die Zuleitung 16 verdeckt von der Beleuchtungseinheit 1 zur Dekorleuchte zu führen, selbst wenn die Beleuchtungseinheit 1 hängend beziehungsweise im Bereich des Verschlusskörpers 5 an der Dekorleuchte montiert ist.

Die Anschlussmittel 7, 8 sind vorliegend als separate Bauteile ausgeführt. Die Anschlussmittel 7, 8 können einerseits mit der Beleuchtungseinheit 1 und andererseits mit der Dekorleuchte verbunden werden. Insbesondere kann vorgesehen werden, dass zur Vereinfachung beziehungsweise Beschleunigung der Montage der Beleuchtungseinheit 1 an der Dekorleuchte vorgesehen wird, die Beleuchtungseinheit 1 in einem ersten Schritt beispielsweise werksseitig mit dem Anschlussmittel 7, 8 zu verbinden und beim Einsetzen der Beleuchtungseinheit 1 in eine bereits bestehende Dekorleuchte lediglich die elektrische Kontaktierung über die Zuleitung 16 herzustellen und die mechanische Festlegung zu erreichen, indem das Anschlussmittel 7, 8 mit der Dekorleuchte verbunden wird. In analoger Weise kann beim Austausch einer Beleuchtungseinheit 1 an einer bereits installierten Dekorleuchte lediglich die Verbindung zwischen dem Anschlussmittel 7, 8 und der Beleuchtungseinheit 1 gelöst werden. Das Anschlussmittel 7, 8 bleibt insofern mit der Dekorleuchte 1 verbunden. Die ausgetauschte Beleuchtungseinheit 1 wird sodann an dem Anschlussmittel 7, 8 festgelegt.

Eine alternative Möglichkeit zur Festlegung der erfindungsgemäßen Beleuchtungseinheit 1 an der Dekorleuchte besteht darin, dass an der Dekorleuchte eine jedenfalls abschnittsweise rohrförmige Aufnahme vorgesehen wird. Die rohrförmige Aufnahme ist in Bezug auf einen Innendurchmesser derselben so dimensioniert, dass die Beleuchtungseinheit 1 mit dem Trägerkörper 2 oder dem Verschlusskörper 5 voran in die Aufnahme eingesetzt beziehungsweise an derselben montiert werden kann. Eines separaten Anschlussmittels 7, 8 bedarf es insofern nicht.

Nach einer alternativen, nicht dargestellten Ausführungsform der Erfindung kann vorgesehen sein, das Anschlussmittel 7, 8 unmittelbar als Bestandteil der Beleuchtungseinheit 1 vorzusehen. Beispielsweise kann das Anschlussmittel 7, 8 als integraler Bestandteil des Trägerkörpers 2 beziehungsweise des Verschlusskörpers 5 ausgeführt werden.

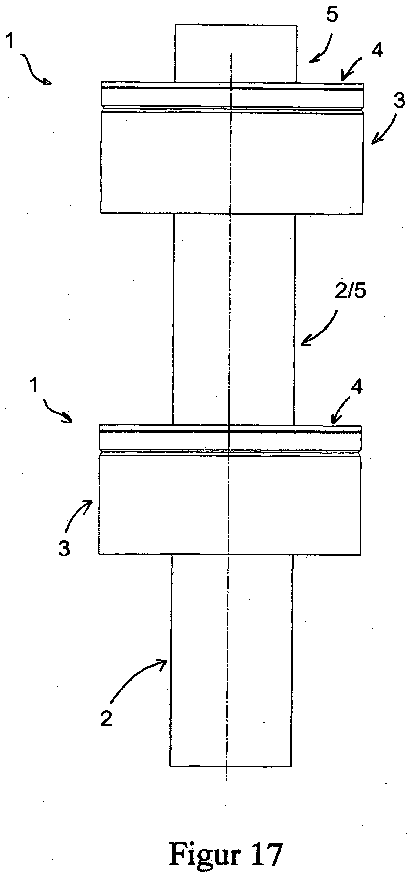

Eine alternative Ausführungsform der Erfindung gemäß Fig. 17 sieht vor, zwei Beleuchtungseinheiten 1 miteinander zu verbinden. Insbesondere dient hierbei der Trägerkörper 2 einer oberen Beleuchtungseinheit 1 zugleich als Verschlusskörper 5 für die untere Beleuchtungseinheit 1. Eine Verbindung der zwei Beleuchtungseinheiten 1 erfolgt durch nicht dargestellte Verbindungsmittel, insbesondere durch Schrauben, welche über den Verschlusskörper 5 und dem Trägerkörper 2 der oberen Beleuchtungseinheit 1 bis in die untere Beleuchtungseinheit 1 geführt werden und an dem Trägerkörper 2 der unteren Beleuchtungseinheit 1 verschraubt sind. Dementsprechend sind der Trägerkörper 2 und der Verschlusskörper 5 der oberen Beleuchtungseinheit 1 so angeordnet, dass die ersten Befestigungsmittel 32 und die zweiten Befestigungsmittel 33 jeweils fluchtend übereinander angeordnet sind. Der Trägerkörper 2 der unteren Beleuchtungseinheit 1 ist so vorgesehen, dass die ersten Befestigungsmittel 32 fluchtend zu den zweiten Befestigungsmitteln 33 der oberen Beleuchtungseinheit 1 positioniert sind. Demzufolge kann das nicht dargestellte Verbindungsmittel durch die zweiten Befestigungsmittel 33 des Verschlusskörpers 5 und die zweiten Befestigungsmittel 33 des oberen Trägerkörpers 2 geführt und in den ersten Befestigungsmittel 32 des unteren Trägerkörpers 2 festgelegt werden.

Durch das Vorsehen der Beleuchtungseinheit 1 gelingt es, ein Leuchtmittel für Dekorleuchten als kompakte, gemeinsame Baueinheit zu realisieren. Das Leuchtmittel 1 kann hierbei über geeignete Anschlussmittel 7, 8 in der Dekorleuchte festgelegt und in einfacher Weise ausgetauscht werden. Insbesondere kann vorgesehen sein, dass die Beleuchtungseinheit 1 vorgesehen ist zum Umrüsten von gegenwärtig mit konventionellen Leuchtmitteln, beispielsweise Halogenlampen, ausgestatteten. Dekorleuchten auf Leuchtmittel in LED-Technologie. Hierdurch gelingt es, die Leuchtmittel 1 betonders langlebig auszuführen und den Energiebedarf der Leuchtmittel 1 zu reduzieren. Gleichzeitig umfasst die Beleuchtungseinheit 1 alle optischen beziehungsweise elektrischen Schnittstellen. Modifikationen an der Dekorleuchte selbst sind insofern vollständig verzichtbar oder nur in minimalem Maße erforderlich. Insbesondere ist die Montage der Beleuchtungseinheit 1 in die Dekorleuchte einstufig. Es ist insbesondere nicht erforderlich, zunächst einen mit Leuchtdioden bestückten Schaltungsträger an ein Gehäuse der Dekorleuchte festzulegen und anschließend beabstandet hierzu eine Optik separat vorzusehen, die über weitere Anschlussmittel in dem Gehäuse der Dekorleuchte festzulegen ist und insbesondere relativ zu den Leuchtdioden beziehungsweise zu dem Schaltungsträger positioniert werden muss.

Das Vorsehen des elektrischen Kontaktmittels 18 und des elektrischen Gegenkontaktmittels 17 an dem Schaltungsträger 11 und der Platine 40 des Ansteuermoduls 13 ist lediglich exemplarisch. Beispielsweise kann vorgesehen sein, dass ein über ein Kabel an dem Schaltungsträger 11 festgelegten Steckelement mit einem Gegensteckelement verbunden wird, welches über aus dem Vergusskörper 39 herausgeführtes Kabel kontaktiert ist. Das mit dem Gegensteckelement verbundene Steckelement und die Kabel können in der Längsausnehmung 29 des Trägerkörpers 2 beziehungsweise in dem Gehäuse 38 des Ansteuermoduls 13 vorgesehen werden.

Nach einer alternativen, nicht dargestellten Ausführungsform der Erfindung können der Verschlusskörper 5 und der Kühlkörper 4 einstückig beziehungsweise als eine Einheit ausgeführt sein.

Gleiche Bauteile und Bauteilfunktionen sind im gleichen Bezugszeichen gekennzeichnet.

### Bezugszeichenliste

- 1: Beleuchtungseinheit
- 2: Trägerkörper
- 3: Optik
- 4: Kühlkörper
- 5: Verschlusskörper
- 6: Verbindungsmittel
- 7: Anschlussmittel
- 8: Anschlussmittel
- 9: Dichtring
- 10: Dichtring
- 11: Schaltungsträger
- 12: Lichtquelle
- 13: Ansteuermodul
- 14: Isolationsfolie
- 15: Isolationsfolie
- 16: Zuleitung
- 17: Gegenkontaktmittel
- 18: Kontaktmittel
- 19: Außenmantelfläche
- 20: Lichteinkoppelelement
- 21: Ausnehmung
- 22: Lichtauskoppelfläche
- 23: Ausnehmung
- 24: Durchgangsöffnung
- 25: Kragarm
- 26: Längsrichtung
- 27: Nase
- 28: Wandung
- 29: Längsausnehmung
- 30: Längsnut
- 31: Positioniermittel
- 31.1: erster Schenkel
- 31.2: Verbindungsschenkel
- 31.3: freier Schenkel
- 32: Befestigungsmittel
- 33: Befestigungsmittel
- 34: Quermittelebene
- 35: Randabschnitt
- 36: Befestigungsausnehmung
- 37: Befestigungsausnehmung
- 38: Gehäuse
- 39: Vergusskörper
- 40: Platine
- 41: Stirnseite
- 42: Stirnseite
- 43: Kragarm
- 44: Kragarm
- 45: Positioniermittel
- 46: Positioniermittel
- 47: Positioniermittel
- 48: Durchgangsausnehmung
- 49: Durchgangsausnehmung
- 50: Durchgangsausnehmung
- 51: Durchgangsausnehmung
- 52: Ausformung
- 53: Ausformung
- 54: Durchgangsausnehmung
- 55: Durchgangsausnehmung
- 56: Durchgangsausnehmung
- 57: Durchgangsausnehmung
- 58: Schenkel
- 59: Anlagefläche
- 60: Bohrung
- 61: Profilierung
- 62: Hohlraum
- 63: Ausnehmung
- 64: Schraube
- 65: Aufnahme
- 66: Montageraum
- 67: Ausformung
- 68: Ausformung

## Patentansprüche

1. Beleuchtungseinheit (1) für eine Dekorleuchte, insbesondere für eine Licht seitlich und nach unten abstrahlende Pilzleuchte, umfassend
- einen Schaltungsträger (11) mit einer Mehrzahl von daran festgelegten und am Umfang verteilten angeordneten Lichtquellen (12) und
- eine Optik (3) zum Umlenken des von den Lichtquellen (12) abgestrahlten Lichts und zum Formen einer Lichtverteilung und
- ein Ansteuermodul (13) zum Ansteuern der Lichtquellen (12) und
- ein Trägerkörper (2) mit einer äusseren Wandung und mit einer von der äusseren Wandung umgebenen Längsausnehmung (29),
wobei an dem Trägerkörper (2) der Schaltungsträger (11) und/oder die Optik (3) und/oder das Ansteuermodul (13) festgelegt sind, wobei von der Wandlung (28) nach innen in Richtung der Gangsausnehmung (29) eine Mehrzahl von Positioniermitteln (31) und Befestigungsmitteln (32, 33) abragt, wobei wenigstens zwei unterschiedliche Arten von Befestigungsmitteln (32, 33) vorgesehen sind,
**dadurch gekennzeichnet dass**,
ein erstes Befestigungsmittel (32) eine in die Längsrichtung (26) erstreckte, im Querschnitt kreisförmige Befestigungsausnehmung (36) mit einem ersten Durchmesser aufweist und dass ein zweites Befestigungsmittel (33) eine ebenfalls in die Längsrichtung (26) erstreckte Befestigungsausnehmung (37) aufweist, welche im Querschnitt größer ist als die kreisförmige Befestigungsausnehmung (36) des ersten Befestigungsmittels (32), wobei die unterschiedlichen Arten von Befestigungsmitteln (32, 33) einander bezogen auf eine Quermittelebene (34) des Trägerkörpers (2) gegenüberliegend zugeordnet sind derart, dass stets ein erstes Befestigungsmittel (32) gegenüberliegend zu einem zweiten Befestigungsmittel (33) vorgesehen ist.

2. Beleuchtungseinheit (1) nach Anspruch 1, **dadurch gekennzeichnet, dass** das Ansteuermodul (13) eine elektrische Zuleitung (16) aufweist, und/oder dass an dem Ansteuermodul (13) ein elektrisches Gegenkontaktmittel (17) vorgesehen sind, welches mit einem Kontaktmittel (18) des Schaltungsträgers (11) verbindbar ist.

3. Beleuchtungseinheit (1) nach Anspruch 1 oder 2, **dadurch gekennzeichnet, dass** an dem Trägerkörper (2) einerseits und an dem Ansteuermodul (13) und/oder Schaltungsträger (11) und/oder der Optik (3) andererseits Positioniermittel (25, 27, 30, 31, 43, 44, 45, 46, 47, 48, 49, 50, 51, 53) vorgesehen sind, welche derart ausgebildet sind, dass in einer Montageposition eine lagefeste Zuordnung des Trägerkörpers (2) zu der Optik (3) und/oder zu dem Schaltungsträger (11) und/oder zu dem Ansteuermodul (13) gegebert ist.

4. Beleuchtungseinheit (1) nach einem der Ansprüche 1 bis 3, **dadurch gekennzeichnet, dass** das Ansteuermodul (13) und/oder die Optik (3) unmittelbar an dem Trägerkörper (2) festgelegt sind.

5. Beleuchtungseinheit (1) nach einem der Ansprüche 1 bis 4, **dadurch gekennzeichnet, dass** der Schaltungsträger (11) und/oder die Optik (3) mittelbar an dem Trägerkörper (2) und unmittelbar an dem Ansteuermodul (13) und/oder an der Optik (3) festgelegt sind.

6. Beleuchtungseinheit (1) nach einem der Ansprüche 1 bis 5, **dadurch gekennzeichnet, dass** ein an dem Schaltungsträger (11) angelegter Kühlkörper (4) vorgesehen ist, wobei der Kühlkörper (4) in der Montageposition den Trägerkörper (2) und/oder den Verschlusskörper (5) unmittelbar berührt.

7. Beleuchtungseinheit (1) nach einem der Ansprüche 1 bis 6, **dadurch gekennzeichnet, dass** der Trägerkörper (2) langgestreckt ausgebildet ist und eine Längsausnehmung (29) aufweist, welche mantelseitig jedenfalls abschnittsweise von einer Wandung (28) umgeben ist, und/oder dass das Ansteuermodul (13) jedenfalls abschnittsweise in einer Ausnehmung des Trägerkörpers (2) vorgesehen ist, bevorzugt in der Längsausnehmung (29).

8. Beleuchtungseinheit (1) nach einem der Ansprüche 1 bis 7, **dadurch gekennzeichnet, dass** ein Verschlusskörper (5) vorgesehen ist, welcher in der Montageposition mit dem Trägerkörper (2) verbunden ist zum kraft- und/oder formschlüssigen Festlegen der Optik (3) und/oder des Ansteuermoduls (13) und/oder des Schaltungsträgers (11).

9. Beleuchtungseinheit (1) nach einem der Ansprüche 1 bis 8, **dadurch gekennzeichnet, dass** der Verschlusskörper (5) mit dem Trägerkörper (2) verschraubt und/oder verklipst ist und/oder dass Verbindungsmittel (6) vorgesehen sind zum Verbinden des Verschlusskörpers (5) mit dem Trägerkörper (2).

10. Beleuchtungseinheit (1) nach einem der Anspräche 1 bis 9, **dadurch gekennzeichnet, dass** die Optik (3) und/oder der Schaltungsträger (11) und/oder das Ansteuermodul (13) zwischen dem Trägerkörper (2) einerseits und dem Verschlusskörper (5) andererseits vorgesehen sind und/oder dass an der Optik (3) und/oder dem Schaltungsträger (11) und/oder dem Ansteuermodul (13) und/oder dem Kühlkörper (4) die Verbindungsmittel (6) und/oder Positionierstifte (46) aufnehmende Ausformungen (52, 53) und/oder Durchgangsöffnungen (48, 49, 50, 51, 55, 56, 57) vorgesehen sind.

11. Beleuchtungseinheit (1) nach einem der Ansprüche 1 bis 10, **dadurch gekennzeichnet, dass** die Beleuchtungseinheit (1) über ein Anschlussmittel (7, 8) an der Dekorleuchte montierbar ist und/oder dass das Anschlussmittel (7, 8) an dem Trägerkörper (2) und/oder dem Verschlusskörper (5) abnehmbar gehalten ist.

12. Beleuchtungseinheit (1) nach einem der Ansprüche 1 bis 11, **dadurch gekennzeichnet ist, dass** an dem Trägerkörper (2) und/oder an dem Verschlusskörper (5) eine Aufnahme für das Anschlussmittel (7, 8) vorgesehen ist zum Festlegen der Beleuchtungseinheit (1) an der Dekorleuchte, bevorzugt zum Festlegen der Beleuchtungseinheit (1) an einem Gehäuse und/oder einem Masten der Dekorleuchte.

13. Beleuchtungseinheit (1) nach einem der Ansprüche 1 bis 12, **dadurch gekennzeichnet, dass** der Trägerkörper (2) und/oder der Verschlusskörper (5) aus einem Hohlprofil und/oder aus einem Strangprofil, bevorzugt aus einem abgelängten Strangpressprofil hergestellt sind und/oder dass der Trägerkörper (2) und der Verschlusskörper (5) eine gleiche Querschnittsgeometrie aufweisen.

## Claims

1. Illumination device (1) for a decoration light, in particular for a mushroom lamp emitting light in sideward and downward direction, comprising:
- a circuit carrier (11) with a plurality of light sources (12) being mounted thereto and being distributed circumferentially, and
- an optical system (3) for deflecting the light emitted by the light sources (12) and for forming a light distribution, and
- a control module (13) for controlling the light sources (12), and
- a support (2) with an outer wall and with a longitudinal recess (29) being surrounded by the outer wall
wherein the circuit carrier (11) and/or the optical system (3) and/or the control module (13) are mounted to the support (2) wherein a plurality of positioning means (31) and fixing means (32, 33) protrudes from the wall (28) inwardly in the direction of the longitudinal recess (29), wherein at least two different kinds of fixing means (32, 33) are provided,
**characterized in that**
a first fixing means (32) comprises a cross-sectionally circular fixing recess (36) extending in longitudinal direction (26) and having a first diameter, and that a second fixing means (33) comprises a fixing recess (37) extending as well in longitudinal direction (26) and being larger in cross-section than the circular fixing recess (36) of the first fixing means (32), wherein the different kinds of fixing means (32, 33) are arranged opposite to each other with respect to a transverse-central plane (34) of the support (2), such that always a first fixing means (32) is arranged opposite to a second fixing means (33).

2. Illumination device (1) according to claim 1, **characterized in that** the control module (13) comprises an electrical supply line (16), and/or that an electrical counter contact means (17) is provided at the control module (13), which counter contact means is connectable with a contact means (18) of the circuit carrier (11).

3. Illumination device (1) according to claim 1 or 2, **characterized in that** positioning means (25, 27, 30, 31,43, 44, 45, 46, 47, 48, 49, 50 ,51, 53) are provided at the support (2) on a first side and at the control module (13) and/or the circuit carrier (11) and/or the optical system (3) on a second side, which positioning means are formed such that a fixed allocation of the support (2) with regard to the optical system (3) and/or to the circuit carrier (11) and/or the control module (13) is given in a mounting position.

4. Illumination device (1) according to any one of claims 1 to 3, **characterized in that** the control module (13) and/or the optical system (3) are directly fixed to the support (2).

5. Illumination device (1) according to any one of claims 1 to 4, **characterized in that** the circuit carrier (11) and/or the optical system (3) are indirectly fixed to the support (2) and are directly fixed to the control module (13) and/or the optical system (3).

6. Illumination device (1) according to any one of claims 1 to 5, **characterized in that** a heat sink (4) being applied to the circuit carrier (11) is provided, wherein the heat sink (4) directly contacts the support (2) and/or the closure (5) in a mounting position.

7. Illumination device (1) according to any one of claims 1 to 6, **characterized in that** the support (2) is formed oblong and comprises a longitudinal recess (29), which is at least section-wise surrounded by a wall (28) on the shell-side, and/or that the control module (13) is provided at least section-wise in a recess of the support (2), preferably in the longitudinal recess (29).

8. Illumination device (1) according to any one of claims 1 to 7, **characterized in that** a closure (5) is provided which is connected to the support (2) in the mounting position, for a force- and/or form-fitting fixation of the optical system (3) and/or the control module (13) and/or the circuit carrier (11).

9. Illumination device (1) according to any one of claims 1 to 8, **characterized in that** the closure (5) is screwed or clipped to the support (2), and/or that connecting means (6) are provided for connecting the closure (5) to the support (2).

10. Illumination device (1) according to any one of claims 1 to 9, **characterized in that** the optical system (3) and/or the circuit carrier (11) and/or the control module (13) are provided between the support (2) on one side and the closure (5) on the other side, and/or that recesses (52, 53) and/or passage openings (48, 49, 50, 51, 55, 56, 57) receiving the connecting means (6) and/or the positioning pins (46) are provided at the optical system (3) and/or the circuit carrier (11) and/or the control module (13) and/or the heat sink (4).

11. Illumination device (1) according to any one of claims 1 to 10, **characterized in that** the illumination device (1) is mountable to the decorative lamp by means of a connection means (7, 8), and/or that the connection means (7, 8) are removably held at the support (2) and/or the closure (5).

12. Illumination device (1) according to any one of claims 1 to 11, **characterized in that** a receptacle for the connection means (7, 8) is provided at the support (2) and/or at the closure (5) for fixing the illumination device (1) to the decorative lamp, preferably for fixing the illumination device (1) at a housing and/or a pole of the decorative lamp.

13. Illumination device (1) according to any one of claims 1 to 12, **characterized in that** the support (2) and/or the closure (5) are manufactured from a hollow profile or from an extruded profile, preferably of a cut-off extruded press profile, and/or that the support (2) and the closure (5) have the same cross-sectional geometry.

## Revendications

1. Unité d'éclairage (1) pour une lampe décorative, en particulier pour une lampe champignon diffusant la lumière latéralement et vers le bas, comprenant
- un support de circuits (11) sur lequel plusieurs sources lumineuses (12) sont fixées et distribuées sur la circonférence et
- une optique (3) pour dévier la lumière émise par les sources lumineuses (12) et former une distribution de la lumière et
- un module de commande (13) pour la commande des sources lumineuses (12) et
- un support (2) avec une paroi extérieure et avec un évidement longitudinal (29) entouré par la paroi extérieure,
dans lequel le support de circuits (11) et/ou l'optique (3) et/ou le module de commande (13) sont fixés sur le support, plusieurs moyens de positionnement (31) et moyens de fixation (32, 33) dépassant de la paroi (28) vers l'intérieur en direction de l'évidement longitudinal (29), parmi lesquels au moins deux types différents de moyens de fixation (32, 33) sont prévus,
**caractérisée en ce qu'**un premier moyen de fixation (32) présente un évidement de fixation (36) circulaire en section qui s'étend dans le sens longitudinal (26) et a un premier diamètre, et **en ce qu'**un deuxième moyen de fixation (33) présente un évidement de fixation (37) qui s'étend également dans le sens longitudinal (26) et dont la section est plus grande que celle de l'évidement de fixation (36) circulaire du premier moyen de fixation (32), les différents types de moyens de fixation (32, 33) étant associés les uns en face des autres par rapport à un plan transversal médian (34) du support (2) de telle manière qu'un premier moyen de fixation (32) soit toujours prévu en face d'un deuxième moyen de fixation (33).

2. Unité d'éclairage (1) selon la revendication 1, **caractérisée en ce que** le module de commande (13) présente une ligne d'entrée électrique (16) et/ou **en ce qu'**un moyen de contact correspondant (17) est prévu sur le module de commande (13) et peut être connecté avec un moyen de contact (18) du support de circuits (11).

3. Unité d'éclairage (1) selon la revendication 1 ou 2, **caractérisée en ce qu'**il est prévu sur le support (2) d'une part et sur le module de commande (13) et/ou le support de circuits (11) et/ou l'optique (3) d'autre part des moyens de positionnement (25, 27, 30, 31, 43, 44, 45, 46, 47, 48, 49, 50, 51, 53) qui sont conformés de manière à obtenir, dans une position de montage, une disposition fixée du corps (2) par rapport à l'optique (3) et/ou au support de circuits (11) et/ou au module de commande (13).

4. Unité d'éclairage (1) selon l'une des revendications 1 à 3, **caractérisée en ce que** le module de commande (13) et/ou l'optique (3) sont fixés directement sur le support (2).

5. Unité d'éclairage (1) selon l'une des revendications 1 à 4, **caractérisée en ce que** le support de circuits (11) et/ou l'optique (3) sont fixés indirectement sur le support (2) et fixés directement sur le module de commande (13) et/ou sur l'optique (3).

6. Unité d'éclairage (1) selon l'une des revendications 1 à 5, **caractérisée en ce qu'**un radiateur (4) est prévu au contact du support de circuits (11), lequel radiateur (4) touche directement le support (2) et/ou l'élément de fermeture (5) dans la position de montage.

7. Unité d'éclairage (1) selon l'une des revendications 1 à 6, **caractérisée en ce que** le support (2) est étiré en longueur et présente un évidement longitudinal (29) qui est entouré lui aussi, au moins par sections, par une paroi (28) du côté de l'enveloppe, et/ou **en ce que** le module de commande (13) est prévu également par sections dans un évidement du support (2), de préférence dans l'évidement longitudinal (29).

8. Unité d'éclairage (1) selon l'une des revendications 1 à 7, **caractérisée en ce qu'**il est prévu un élément de fermeture (5) qui est relié au support (2) dans la position de montage en vue de la fixation par friction et/ou par engagement positif de l'optique (3) et/ou du module de commande (13) et/ou du support de circuits (11).

9. Unité d'éclairage (1) selon l'une des revendications 1 à 8, **caractérisée en ce que** l'élément de fermeture (5) est vissé et/ou clipsé au support (2) et/ou **en ce que** des moyens de liaison (6) sont prévus pour relier l'élément de fermeture (5) au support (2).

10. Unité d'éclairage (1) selon l'une des revendications 1 à 9, **caractérisée en ce que** l'optique (3) et/ou le support de circuits (11) et/ou le module de commande (13) sont prévus entre le support (2) d'une part et l'élément de fermeture (5) d'autre part et/ou **en ce que** les moyens de liaison (6) et/ou des moulures (52, 53) recevant des goupilles de positionnement (46) et/ou des ouvertures traversantes (48, 49, 50, 51, 55, 56, 57) sont prévus sur l'optique (3) et/ou sur le support de circuits (11) et/ou sur le module de commande (13) et/ou sur le radiateur (4).

11. Unité d'éclairage (1) selon l'une des revendications 1 à 10, **caractérisée en ce que** l'unité d'éclairage (1) peut être montée à la lampe décorative à l'aide de moyens de raccordement (7, 8) et/ou **en ce que** les moyens de raccordement (7, 8) sont retenus sur le support (2) et/ou l'élément de fermeture (5) de façon amovible.

12. Unité d'éclairage (1) selon l'une des revendications 1 à 11, **caractérisée en ce qu'**un logement pour les moyens de raccordement (7, 8) est prévu sur le support (2) et/ou sur l'élément de fermeture (5) pour fixer l'unité d'éclairage (1) à la lampe décorative, de préférence pour fixer l'unité d'éclairage (1) sur un boîtier et/ou un pied de la lampe décorative.

13. Unité d'éclairage (1) selon l'une des revendications 1 à 12, **caractérisée en ce que** le support (2) et/ou l'élément de fermeture (5) sont fabriqués à partir d'un profilé creux et/ou d'un profilé extrudé, de préférence à partir d'un profilé extrudé recoupé, et/ou **en ce que** le support (2) et l'élément de fermeture (5) présentent la même géométrie en section.
